(19) Europäisches Patentamt
European Patent Office
Office européen des brevets

(11) **EP 3 455 517 B1**

(12) **EUROPÄISCHE PATENTSCHRIFT**

(45) Veröffentlichungstag und Bekanntmachung des Hinweises auf die Patenterteilung:
**09.09.2020 Patentblatt 2020/37**

(21) Anmeldenummer: **17718364.7**

(22) Anmeldetag: **19.04.2017**

(51) Int Cl.:
***F16D 65/12*** *(2006.01)*

(86) Internationale Anmeldenummer:
**PCT/EP2017/059291**

(87) Internationale Veröffentlichungsnummer:
**WO 2017/194280 (16.11.2017 Gazette 2017/46)**

(54) **BREMSSCHEIBE UND VERFAHREN ZU IHRER HERSTELLUNG**

BRAKE DISC AND METHOD FOR PRODUCING SAME

DISQUE DE FREIN ET SON PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.05.2016 DE 102016207876**

(43) Veröffentlichungstag der Anmeldung:
**20.03.2019 Patentblatt 2019/12**

(73) Patentinhaber: **Robert Bosch GmbH
70442 Stuttgart (DE)**

(72) Erfinder:
• **DOERNE, Stefan
70190 Stuttgart (DE)**
• **POTAPENKO, Ilja
35216 Biedenkopf (DE)**

(56) Entgegenhaltungen:
EP-A2- 0 578 927    EP-A2- 2 746 613
WO-A1-2015/007497    BE-A6- 1 016 421
DE-A1- 3 312 804    DE-A1- 4 310 978
DE-T2- 68 901 654    FR-A- 1 304 241

## Beschreibung

Die Erfindung betrifft eine Bremsscheibe, insbesondere für Kraftfahrzeuge, mit einer Grundscheibe aus einem ersten Material und mit einer verschleißreduzierenden Beschichtung aus einem zweiten Material.

Weiterhin betrifft die Erfindung eine Bremseinrichtung für ein Kraftfahrzeug, mit einer mit einem Rad verbindbaren/verbundenen Bremsscheibe und mit einem der Bremsscheibe zugeordneten Bremssattel, der wenigstens ein betätigbares Bremselement trägt.

Ferner betrifft die Erfindung ein Verfahren zum Herstellen einer derartigen Bremsscheibe.

Stand der Technik

Herkömmliche Bremsanlagen von Kraftfahrzeugen weisen jedem Rad zugeordnet wenigstens eine Bremsscheibe auf, die zwischen zwei Bremsbacken eines Bremssattels zum Erzeugen eines Bremsmoments verspannbar ist. Bei dem Verspannen tritt Reibung zwischen den Bremsbacken und der Bremsscheibe auf, welche Wärme erzeugt. Die erzeugte Wärme wird dabei zumindest teilweise in der Bremsscheibe gespeichert. In extremen Fällen, wie beispielsweise bei einer Bremsung aus hohen Geschwindigkeiten, kann die Temperatur der Bremsscheibe dadurch sehr hohe Werte erreichen, wodurch die Festigkeit der Bremsscheibe beeinträchtigt werden kann. Üblicherweise werden Bremsscheiben daher aus Grauguss hergestellt, der eine hohe Temperaturbeständigkeit aufweist. Durch den Fahrtwind erfolgt außerdem in der Regel eine schnelle Abkühlung der Bremsscheibe.

Alternativ ist es bekannt, verschleißfeste Bremsscheiben herzustellen, die beispielsweise als Vollkeramikbremsscheiben oder Graugussbremsscheiben mit einer Hartmetallschicht ausgebildet werden. Derartige Bremsscheiben sind verhältnismäßig teuer in der Herstellung und haben den Nachteil, dass aufgrund der unterschiedlichen Ausdehnungskoeffizienten der Materialen von Grundscheibe und verschleißreduzierender Beschichtung bei hohen Temperaturbelastungen Risse in der Beschichtung entstehen können. Darüber hinaus wird bei den bekannten Beschichtungsverfahren die Bremsscheibe thermisch belastet, was zu einer Oxidation der verschleißreduzierenden Schicht führen kann.

Weiterhin ist aus der Druckschrift BE 1 016 421 A6 eine aus einem Leichtmetall gefertigte Bremsscheibe bekannt. Die Bremsscheibe weist eine verschleißmindernde Beschichtung in Form einer Oxidschicht auf, die durch plasma-elektrolytische Oxidation (PEO) hergestellt wird.

Offenbarung der Erfindung

Die erfindungsgemäße Bremsscheibe mit den Merkmalen des Anspruchs 1 hat den Vorteil, dass sie verhältnismäßig günstig herstellbar ist, und dennoch eine ausreichende Festigkeit und Verschleißreduzierung bietet, wobei jedoch die oben genannten Nachteile überwunden werden. Erfindungsgemäß wird dies dadurch erreicht, dass das erste Material beziehungsweise die Grundscheibe aus einem Leichtmetall gefertigt ist, und dass das zweite Material beziehungsweise die Beschichtung eine Oxidschicht ist. Eine Oxidschicht, insbesondere eine Harteloxalschicht wird durch ein Hartanodisieren, das auch als Harteloxieren oder Hartcoatieren bezeichnet wird, oder durch plasma-elektrolytische Oxidation (PEO) hergestellt. Dabei erfolgt eine elektrolytische Oxidation der Grundscheibe, durch welche eine abriebsfeste Schicht an der Grundscheibe entsteht. Die Grundscheibe wird dazu bevorzugt in einen Elektrolyten getaucht und als Anode geschaltet. Die Oberfläche der Grundscheibe wird dabei oxidiert, sodass sich auf dem Leichtmetall eine Oxidschicht bildet. Diese Schicht weist eine hohe verschleißmindernde Wirkung auf und eine hohe Belastbarkeit und Festigkeit, auch bei hohen Temperaturen, die im Betrieb der Bremsscheibe auftreten können. Insbesondere entfallen dabei die zuvor genannten Nachteile bezüglich unterschiedlicher Temperaturausdehnungskoeffizienten. Die erfindungsgemäße Bremsscheibe ist außerdem kostengünstig realisierbar.

Insgesamt ergibt sich dabei der Vorteil, dass zur Herstellung der Bremsscheibe Fertigungsverfahren zur Formgebung zur Verfügung stehen, die bisher bei Grauguss-Bremsscheiben nicht möglich waren, weil die Leichtmetalle bei niedrigeren Temperaturen schmelzen. Damit kann beispielsweise Gießen, Metallpulverspritzgießen, 3D-Drucken, Tiefziehen oder dergleichen genutzt werden. Auch eine Kombination dieser Verfahren ist möglich. Darüber hinaus können für Leichtmetall-Bremsscheiben einfachere Prozesse beziehungsweise genauere Prozessführungen in den Fügeprozessen, wie beispielsweise Laser- oder Ultraschallschweißen, eingesetzt werden. Durch das Hartanodisieren zur Herstellung der Harteloxalschicht werden die ersten Mikrometer der Leichtmetalloberfläche in eine sehr harte und abriebsfeste Oxidationsschicht gewandelt. Dabei ist die chemische Anbindung der dabei entstehenden Oxidschicht an das Leichtmetallsubstrat sehr gut, insbesondere besser als bei einer Hartmetallbeschichtung auf einer Grauguss-Bremsscheibe. Durch Anwenden eines elektrischen Feldes in dem Beschichtungsverfahren wird eine geschlossene Oxidschicht erzeugt, die Abplatzer oder Korrosionsschäden verhindert. Die Oxidschicht ist selbst widerstandsfähig gegen Reinigungsmittel und weist eine homogene Schichtdicke auf, wodurch der Verschleiß weiter minimiert wird. Im Vergleich zu Hartbeschichtung einer Grauguss-Bremsscheibe ist das Hartanodisieren oder die plasmaelektrolytische Oxidation kostengünstig. Zwischenschichten sind beim Hartanodisieren oder PEO-Verfahren nicht notwendig.

Gemäß einer bevorzugten Weiterbildung der Erfindung ist vorgesehen, dass das Leichtmetall Aluminium ist. Dadurch entsteht beim Harteloxieren eine Aluminiumoxidschicht mit den vorgenannten Vorteilen.

Alternativ ist bevorzugt vorgesehen, dass das Leichtmetall Titan ist. Darüber hinaus ist es auch denkbar, die Grundscheibe aus einem anderen geeigneten Leichtmetall, wie beispielsweise Magnesium, herzustellen.

Erfindungsgemäß ist vorgesehen, dass das erste Material auf einem aus Kunststoff gefertigten Trägerkörper aufgebracht ist. Die Grundscheibe ist somit nicht aus einem Vollguss hergestellt, sondern mehrteilig ausgebildet, wobei die Grundscheibe auf den Trägerkörper aufgebracht ist. Die Grundscheibe kann als vollgegossenes Element oder als MIM-Bauteil ausgeführt sein.

Gemäß einer weiteren Ausführungsform der Erfindung ist bevorzugt vorgesehen, dass die Grundscheibe selbst auf einen Trägerkörper aufgebracht ist. In diesem Fall ist beispielsweise vorgesehen, dass die Grundscheibe aus einem geformten Blech aus einer Legierung gefertigt ist, das durch Harteloxieren wie zuvor beschrieben bearbeitet und anschließend auf den Trägerkörper aufgebracht wird/wurde. Der Trägerkörper ist insbesondere als Wärmespeicher beziehungsweise als Trägerkörper mit hoher Wärmeleitfähigkeit ausgebildet.

Erfindungsgemäß ist vorgesehen, dass der Trägerkörper wenigstens eine Kammer aufweist, in welcher das Phasenwechselmaterial angeordnet ist. Die Kammer ist insbesondere verschließbar oder verschlossen ausgebildet, sodass das Phasenwechselmaterial nicht entweichen kann. Dabei wird erreicht, dass die Wärmeaufnahmekapazität der Bremsscheibe dauerhaft erhalten bleibt. Zweckmäßigerweise weist die Grundscheibe und/oder der Trägerkörper mehrere über den Umfang gleichmäßig verteilt angeordnete Kammern mit Phasenwechselmaterial auf, sodass im Betrieb der Bremsscheibe keine Unwuchten entstehen.

Die erfindungsgemäße Bremseinrichtung mit den Merkmalen des Anspruchs 4 zeichnet sich durch die erfindungsgemäße Ausgestaltung der Bremsscheibe aus. Es ergeben sich hierdurch die bereits genannten Vorteile.

Bevorzugt ist vorgesehen, dass an dem Bremssattel wenigstens ein in Berührungskontakt mit der Bremsscheibe bringbares oder stehendes Wärmeleitelement angeordnet ist. Durch den Berührungskontakt des Wärmeleitelements zu der Bremsscheibe wird erreicht, dass in der Bremsscheibe gespeicherte oder entstandene Wärme über das Wärmeleitelement aus der Bremsscheibe abgeführt wird. Insbesondere besteht der Berührungskontakt zwischen Grundscheibe und Wärmeleitelement. Der Berührungskontakt besteht dabei außerdem insbesondere in einem Bereich, in welchem die Grundscheibe mit der Harteloxalschicht versehen ist, um Verschleiß zu vermeiden.

Insbesondere ist vorgesehen, dass das Wärmleitelement eine Kontaktbürste ist, die insbesondere dauerhaft in Berührungskontakt mit der Bremsscheibe steht. Die Kontaktbürste ist dazu bevorzugt einer Stirnseite der Bremsscheibe zugeordnet und axial gegen die Stirnseite insbesondere mit einer Vorspannkraft gedrückt, sodass der dauerhafte Berührungskontakt gewährleistet ist. Durch die schleifende Berührung wird dann Wärme in das Wärmeleitelement von der Bremsscheibe abgegeben.

Alternativ ist bevorzugt vorgesehen, dass das Wärmeleitelement ein drehbar gelagertes Kontaktrad ist, das auf der Bremsscheibe, insbesondere auf einer Stirnseite der Bremsscheibe abrollt. Dadurch wird der Verschleiß zwischen Wärmeleitelement und Bremsscheibe minimiert und eine vorteilhafte Wärmeabführung gewährleistet. Gemäß einer ersten Ausführungsform ist das Wärmeleitelement vorteilhafterweise dauerhaft in Berührungskontakt mit der Grundscheibe. Gemäß einer zweiten Ausführungsform ist bevorzugt vorgesehen, dass dem Wärmeleitelement ein Aktuator zugeordnet ist, welcher das Wärmeleitelement der Bremsscheibe bei Bedarf zuführt, um diese zu berührungskontaktieren und Wärme abzuführen. Insbesondere ist vorgesehen, dass die aktuelle Betriebstemperatur der Bremsscheibe überwacht, beispielsweise gemessen oder berechnet wird, und dass in Abhängigkeit von der ermittelten Betriebstemperatur das Wärmeleitelement der Bremsscheibe zugeführt wird, um eine Überhitzung der Bremsscheibe zu vermeiden.

Gemäß einer bevorzugten Weiterbildung der Erfindung ist vorgesehen, dass das Wärmeleitelement thermisch mit einer Wärmesenke verbunden ist. Damit ist die von der Bremsscheibe in das Wärmeleitelement abgegebene Wärme der Wärmesenke zuführbar, sodass das Wärmeleitelement nicht als zusätzlicher Wärmespeicher, sondern vielmehr als Wärmeleiter dient, welcher die in der Bremsscheibe entstandene Wärme der Wärmesenke zuführt. Damit ist eine dauerhafte vorteilhafte Kühlung der Bremsscheibe gewährleistet.

Das erfindungsgemäße Verfahren mit den Merkmalen des Anspruchs 9 führt zu einer Bremsscheibe mit den oben genannten Vorteilen. Insbesondere ist vorgesehen, dass der Grundkörper aus Titan oder Aluminium gefertigt wird. Auch eine Fertigung aus Magnesium ist denkbar.

Gemäß einer bevorzugten Ausführungsform der Erfindung ist vorgesehen, dass die Grundscheibe als Blechteil hergestellt und mit der Harteloxalbeschichtung versehen und abschließend auf einen oder den Trägerkörper aufgebracht wird.

Weitere Vorteile und bevorzugte Merkmale ergeben sich insbesondere aus dem zuvor Beschriebenen sowie aus den Ansprüchen.

Im Folgenden soll die Erfindung anhand der Zeichnung näher erläutert werden. Dazu zeigen

Figur 1      ein erstes Ausführungsbeispiel einer vorteilhaften Bremsscheibe,

Figur 2      eine Detailansicht der Bremsscheibe,

Figur 3      eine Bremseinrichtung mit der Bremsscheibe und

Figur 4      ein zweites Ausführungsbeispiel der Bremsscheibe.

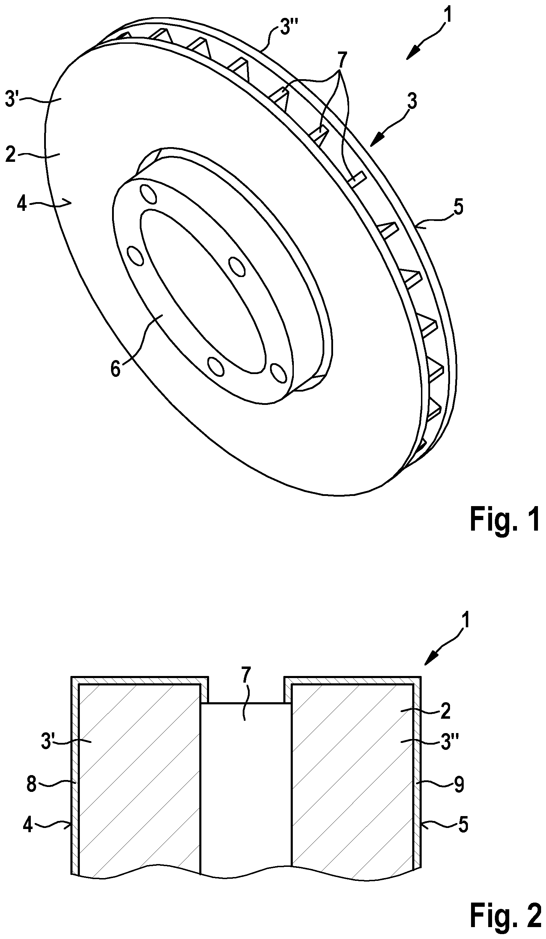

Figur 1 zeigt in einer perspektivischen Darstellung eine Bremsscheibe 1 für ein nicht dargestelltes Kraftfahrzeug. Die Bremsscheibe 1 weist einen Bremsring 3 auf, der von einer Grundscheibe 2 gebildet wird. Der Bremsring 3 weist an seinen beiden Stirnseiten jeweils eine Bremsfläche 4 beziehungsweise 5 auf. Mittig weist die Bremsscheibe 1 einen Trägertopf 6 zur Befestigung der Bremsscheibe 1 an einem Radlager oder einem Rad des Kraftfahrzeugs auf. Der Trägertopf 6 kann sich materialtechnisch von dem Bremsring unterscheiden und beispielsweise aus Aluminium gefertigt sein. Dadurch wird die ungefederte Masse verringert und eine günstigere Wärmeableitung an Narbe und Felge erreicht. An dem Trägertopf 6 sind mehrere Löcher für Schraubverbindungen für die Befestigung ausgebildet. Die Bremsflächen 4, 5 unterliegen im Betrieb einem Verschleiß, der dazu führt, dass die Bremsscheibe 1 regelmäßig ausgetauscht werden muss. Heutige Bremsscheiben werden üblicherweise aus Grauguss und teilweise auch aus Sphärohguss hergestellt oder aus einer geeigneten StahlLegierung gegossen und durch Drehen bearbeitet. Bremsscheiben für Motorräder werden vorzugsweise aus korrosionsarmen Stählen gefertigt. Teilweise werden auch verschleißfestere Keramikbremsen eingesetzt, wobei diese zu hohen Kosten führen. Für eine stärkere Bremsleistung, eine höhere Verschleißfestigkeit und eine bessere Fading-Unempfindlichkeit bei geringerem Gewicht finden im Rennsport und Flugzeugbau auch mit Kohlestofffasern verstärktes Siliziumkarbid und kohlenstofffaserverstärkter Kunststoff für Bremsscheiben Anwendung. Fahrradbremsscheiben können auch aus Blech gestanzt werden.

Die Grundscheibe 2 beziehungsweise der Bremsring 3 weist zwei Bremsringe 3' und 3" auf, die beabstandet zueinander angeordnet sind und jeweils eine der Bremsflächen 4 beziehungsweise 5 bilden. Zwischen den Bremsringen 3' und 3" sind Abstandshalter in Form von Rippen 7 angeordnet, welche mehrere Hohlräume zwischen den Bremsringen 3', 3" bilden. Durch die beim Fahren entstehende Zentrifugalkraft entsteht dabei eine Luftströmung zwischen den Bremsringen 3', 3" von innen nach außen, sodass die Bremsscheibe 1 aktiv gekühlt wird. Optional können auch Lüftungslöcher in dem jeweiligen Bremsring 3', 3" ausgebildet sein, um die Luftkühlung zu verbessern, indem Luftströmung auch durch die Lüftungslöcher gelangt und dadurch Verwirbelungen erzeugt, welche den Wärmeübergang zwischen Bremsscheibe und Luft optimieren.

Die Grundscheibe 2 beziehungsweise die Bremsringe 3', 3" und gegebenenfalls auch die Rippen 7 sind aus einem Leichtmetall, insbesondere Titan, Aluminium oder Magnesium gefertigt. Die Bremsflächen 4 und 5 sind außerdem mit einer Oxidschicht 8, 9 versehen.

Figur 2 zeigt dazu in einer vereinfachten Schnittdarstellung eine vergrößerte Detailansicht der Bremsscheibe 1. Gemäß dem vorliegenden Ausführungsbeispiel sind beide Bremsflächen 4 und 5 mit einer Oxidschicht 8, 9 versehen, die sich insbesondere 100nm

bis 10$\mu$m in das Material der Bremsringe 3', 3" erstreckt. Die Oxidschicht ist insbesondere durch Hartanodisieren oder plasma-elektrolytisches Oxidieren der Grundscheibe 2 beziehungsweise der Bremsringe 3', 3" hergestellt. Ist die Grundscheibe 2 aus Aluminium gefertigt, so werden die Bremsflächen durch die genannten Verfahren beispielsweise in eine Aluminiumoxidschicht gewandelt beziehungsweise mit einer solchen versehen.

Die Bremsscheibe ist durch die Fertigung aus einem Leichtmetall kostengünstig hergestellt und gewährleistet aufgrund der vorteilhaften Oxidschicht einen geringen Verschleiß und eine hohe Temperaturbeständigkeit. Durch die Ausbildung der verschleißreduzierenden Oxidschicht 8, 9 ist eine optimale chemische Anbindung der Schutzschicht an die Grundscheibe 2 gewährleistet. Darüber hinaus ist die Oxidschicht homogen und dicht erzeugt, sodass eine Korrosion der Grundscheibe 2 verhindert ist.

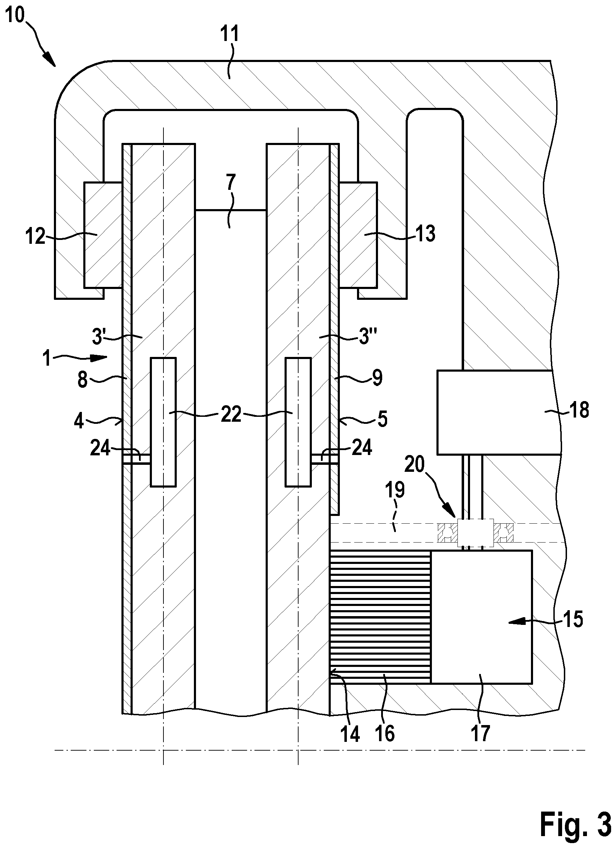

Figur 3 zeigt in einer vereinfachten Darstellung eine Bremseinrichtung 10, welche einen Bremssattel 11 aufweist, der zwei beweglich gelagerte Bremsbacken 12, 13 aufweist, zwischen denen die Bremsscheibe 1 liegt, sodass die Bremsbacke 12 der Bremsfläche 4 mit der Oxidschicht 8 und die Bremsbacke 13 der Bremsfläche 5 mit der Oxidschicht 9 zugeordnet ist. Werden die Bremsbacken 12, 13 aufeinander zu bewegt, wird die dazwischen befindliche Bremsscheibe 1 dazwischen verklemmt und es entsteht eine Haftreibung, die auf die drehende Bremsscheibe 1 verzögernd wirkt, wie bei herkömmlichen Bremseinrichtungen.

Vorliegend weist der innenliegende Bremsring 3" einen ringförmigen Bereich 14 auf, der frei von der Oxidschicht 9 ist. Diesem ringförmigen Bereich 14 ist ein Wärmeleitelement 15 zugeordnet, das vorliegend als Wärmeleitbürste 16 ausgebildet ist und durch einen Bürstenhalter 17 mittels einer Vorspannkraft gegen die Bremsscheibe 1 im Bereich des Bereichs 14 gedrängt ist. Die Bürste 16 ist aus Metall gefertigt und dient zur Wärmeableitung. Das Wärmeleitelement 15 ist außerdem mit einer Wärmesenke 18 verbunden, an welche die durch das Wärmeleitelement 15 aufgenommene Wärme abgeführt wird. Bei der Wärmesenke 18 kann es sich beispielsweise um einen Kühler, ein Wärmespeicherelement oder eine Kühlmittelleitung eines Kühlkreislaufs des Kraftfahrzeugs handeln.

Der Bereich 14, der vorliegend radial innerhalb der Oxidschicht 9 liegt, kann auch als Nut in dem Bremsring 3" ausgeführt sein, wodurch eine verbesserte Führung des Wärmeleitelements 15 ermöglicht wird. In einer alternativen Ausgestaltung ist bevorzugt vorgesehen, dass der Bereich 14 mit einem Hartmetall beschichtet ist. Die Maximaltemperatur der Bremsscheibe 1 wird somit durch die Auslegung des Berührungskontakts zwischen dem Wärmeleitelement 15 und der Bremsscheibe 1 sowie durch die thermische Wärmeableitung zu der Wärmesenke 18 begrenzt.

Alternativ zu der Ausgestaltung als Bürste 16 ist gemäß einem weiteren Ausführungsbeispiel vorgesehen, dass das Wärmeleitelement 15 als Kontaktrad 19 (gestrichelt dargestellt) ausgebildet ist, das durch ein Lager 20, vorliegend ein Wälzkörperlager, drehbar an dem Bremssattel 11 gelagert ist. Dabei ist das Lager 20 in thermischem Kontakt zu der Wärmesenke 18 ausgebildet. Das Kontaktrad 19 steht wie auch die alternative Bürste 16 im dauerhaften Berührungskontakt mit dem Bremsring 3", um durch die Berührungskontaktierung Wärme von der Bremsscheibe 1 zu der Wärmesenke 18 abzuführen. Die Drehachse des Kontaktrads 19 ist dabei radial bezüglich der Drehachse der Bremsscheibe 1 ausgerichtet.

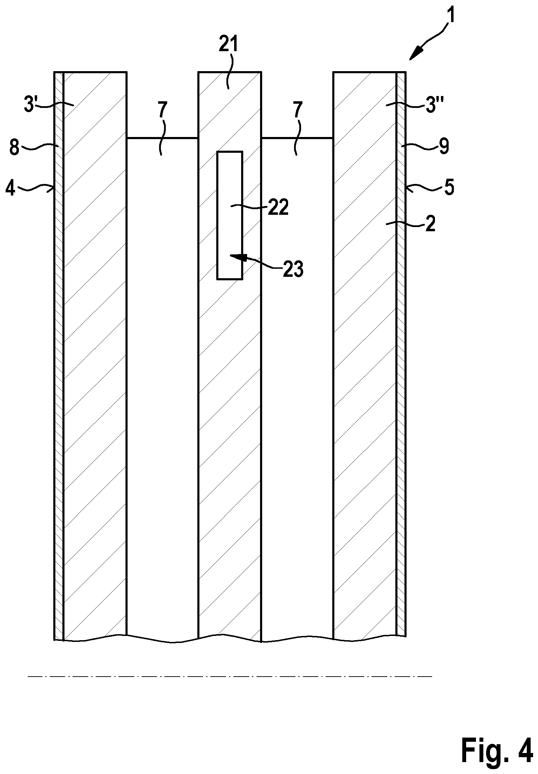

Figur 4 zeigt ein weiteres Ausführungsbeispiel der Bremsscheibe 1 in einer vereinfachten Schnittdarstellung. Im Unterschied zu den vorhergehenden Ausführungsbeispielen ist nunmehr vorgesehen, dass die Bremsscheibe 1 ein Wärmespeicherelement 21 aufweist. Das Wärmespeicherelement 21 liegt zwischen den Bremsringen 3' und 3" und ist mit diesen thermisch verbunden.

Insbesondere ist das Wärmespeicherelement 21 einstückig mit den Bremsringen 3', 3" und den Rippen 7 ausgebildet. Im Inneren weist das Wärmespeicherelement 21, das insofern einen Wärmespeicherring darstellt, eine oder mehrere Kammern 22 auf, in welchen ein Material mit hoher spezifischer Wärmekapazität, wie beispielsweise Öl, angeordnet beziehungsweise gehalten ist. Besonders bevorzugt ist das Material 23 als Phasenwechselmaterial ausgebildet, wie beispielsweise Paraffine, das Wärme speichert durch einen Wechsel des Aggregatzustands von beispielsweise fest zu flüssig. Dadurch wird zusätzlich zur Temperaturerhöhung in Abhängigkeit der spezifischen Wärmekapazität des Phasenwechselmaterials Wärme mittels eines Phasenwechsels in der Bremsscheibe 1 gespeichert und damit eine thermische Überlastung der Bremsscheibe 1, insbesondere der Bremsringe 3' und 3" vermieden.

Vorteilhafterweise wird die Grundscheibe 2 durch Metallpulverspritzgießen, 3D-Drucken und/oder Tiefziehen gefertigt, sodass die Herstellung der Bremsscheibe 1 kostengünstig und mit geringem Aufwand durchführbar ist.

Alternativ zu dem vorliegenden Ausführungsbeispiel sind eine oder mehrere derartiger Kammern 22 in den Bremsringen 3' und 3" selbst ausgebildet, wie in Figur 3 gezeigt. Auch ist es denkbar, bei dem Ausführungsbeispiel von Figur 4 zusätzliche Kammern 22 in den Bremsringen 3' und 3" vorzusehen. Die Kammern 22 sind wie zuvor bereits beschrieben mit einem Material mit hoher spezifischer Wärmekapazität und/oder ein Phasenwechselmaterial befüllt. Öffnungen 24, die zum Befüllen der Kammern dienen, werden abschließend verschlossen, insbesondere verschweißt.

Die Bremsscheibe 1 gemäß den vorliegenden Ausführungsbeispielen ist jeweils einteilig ausgebildet. Gemäß einer alternativen Ausführung ist jedoch vorteilhafterweise vorgesehen, dass die Bremsscheibe mehrteilig ausgebildet ist, wobei die Teile durch geeignete Fügetechnologien miteinander verbunden sind, wie beispielsweise Ultraschallschweißen oder Laserstrahlschweißen. Insbesondere ist es denkbar, die Bremsscheibe 1 dreiteilig herzustellen, wobei Trennungslinien vorzugsweise jeweils in einer Mittelebene eines der Bremsringe 3' und 3" liegen, wie in Figur 3 durch gestrichelte Linien gezeigt. Auf diese Art und Weise können auch die Kammern 22 kostengünstig bei der Fertigung hergestellt werden.

Um im Allgemeinen die Festigkeitsabnahme bei hohen Temperaturen und die Gewichtsreduktion durch die Vermeidung von Metallmasse zu verbessern, wird die maximale Temperatur durch Erhöhung der Wärmekapazität C gesenkt. Damit resultiert bei gleicher, zu speichernder Wärmeenergie Q eine niedrigere Temperaturdifferenz, das heißt eine niedrigere Maximaltemperatur $T_{max}$. eine Reduktion der Temperatur kann des Weiteren bei Einsatz von Phasenwechselmaterialien erreicht werden. Dies wird im Folgenden mit physikalischen Grundlagengleichungen erklärt:

$$\Delta T = \frac{Q}{C}$$

Die Wärmekapazität C wird durch drei Parameter beeinflusst, die materialabhängige, spezifische Wärmekapazität c, das Volumen V und die Dichte $\rho$. Letztere lassen sich zum Gewicht m zusammenfassen, welches allerdings möglichst niedrig gehalten sein soll:

$$C = c \cdot \rho \cdot V, C = c \cdot m$$

Um möglichst viel Wärme bei niedrigem Gewicht im Vergleich zu Graugussbremsscheiben speichern zu können, wird primär eine hohe spezifische Wärmekapazität gewählt. Dazu eignen sich Materialen mit Phasenwechsel, wie beispielsweise Paraffin. Die bei einem Phasenübergang zusätzlich speicherbare Wärme beträgt:

$$Q = m \cdot L,$$

wobei L die Schmelzenthalpie ist.

**Patentansprüche**

1. Bremsscheibe (1), insbesondere für ein Kraftfahrzeug, mit einer Grundscheibe (2) aus einem ersten Material und mit einer verschleißmindernden Beschichtung (8,9) aus einem zweiten Material, wobei das erste Material ein Leichtmetall und das zweite Material eine Oxidschicht (8,9) ist, **dadurch gekennzeichnet, dass** das erste Material auf einem aus Kunststoff gefertigten Trägerkörper aufgebracht ist, und der Trägerkörper wenigstens eine Kammer (22) aufweist, in welcher ein Phasenwechselmaterial angeordnet ist.

2. Bremsscheibe nach Anspruch 1, **dadurch gekennzeichnet, dass** das Leichtmetall Aluminium ist.

3. Bremsscheibe nach Anspruch 1, **dadurch gekennzeichnet, dass** das Leichtmetall Titan oder Magnesium ist.

4. Bremseinrichtung (10) für ein Kraftfahrzeug, mit einer mit einem Rad verbindbaren/verbunden Bremsscheibe (1) mit einem der Bremsscheibe (1) zugeordneten Bremssattel (11), der wenigstens ein betätigbares Bremselement (12,13) trägt, **dadurch gekennzeichnet, dass** die Bremsscheibe (1) nach einem oder mehreren der Ansprüche 1 bis 3 ausgebildet ist.

5. Bremseinrichtung nach Anspruch 4, **dadurch gekennzeichnet, dass** an dem Bremssattel (11) wenigstens ein in Berührungskontakt mit der Bremsscheibe (1) bringbares/stehendes Wärmeleitelement (15) angeordnet ist.

6. Bremseinrichtung nach einem der Ansprüche 4 oder 5, **dadurch gekennzeichnet, dass** das Wärmeleitelement (15) eine Kontaktbürste (16) ist.

7. Bremseinrichtung nach einem der Ansprüche 4 bis 6, **dadurch gekennzeichnet, dass** das Wärmeleitelement (15) ein drehbar gelagertes Kontaktrad (19) ist.

8. Bremseinrichtung nach einem der Ansprüche 4 bis 7, **dadurch gekennzeichnet, dass** das Wärmeleitelement (15) thermisch mit einer Wärmesenke (18) verbunden ist.

9. Verfahren zum Herstellen einer Bremsscheibe (1) gemäß einem oder mehreren der vorhergehenden Ansprüche, mit folgenden Schritten:

- Bereitstellen einer Grundscheibe (2) aus Leichtmetall,

wobei das Leichtmetall auf einen aus Kunststoff gefertigten Trägerköper aufgebracht wird, und wobei der Trägerkörper wenigstens eine Kammer (22) aufweist, in welcher ein Phasenwechselmaterial angeordnet ist,

- Herstellen einer Oxidschicht (8, 9) auf der Grundscheibe (2) durch Hartanodisieren oder durch plasmaelektrolytische Oxidation.

10. Verfahren nach Anspruch 9, **dadurch gekennzeichnet, dass** die Grundscheibe (2) aus Titan oder Aluminium gefertigt wird.

11. Verfahren nach einem der Ansprüche 9 und 10, **dadurch gekennzeichnet, dass** die Grundscheibe (2) als Blechteil hergestellt wird.

**Claims**

1. Brake disc (1), in particular for a motor vehicle, having a base disc (2) composed of a first material and having a wear-reducing coating (8, 9) composed of a second material, wherein the first material is a lightweight metal and the second material is an oxide layer (8, 9), **characterized in that** the first material is applied to a support body manufactured from plastic, and the support body has at least one chamber (22), in which a phase change material is arranged.

2. Brake disc according to Claim 1, **characterized in that** the lightweight metal is aluminium.

3. Brake disc according to Claim 1, **characterized in that** the lightweight metal is titanium or magnesium.

4. Braking device (10) for a motor vehicle, having a brake disc (1) which can be connected/is connected to a wheel and having a brake caliper (11), which is assigned to the brake disc (1) and carries at least one actuable braking element (12, 13), **characterized in that** the brake disc (1) is designed according to one or more of Claims 1 to 3.

5. Braking device according to Claim 4, **characterized in that** at least one heat conducting element (15) that can be brought into or is in direct contact with the brake disc (1) is arranged on the brake caliper (11).

6. Braking device according to either of Claims 4 and 5, **characterized in that** the heat conducting element (15) is a contact brush (16).

7. Braking device according to one of Claims 4 to 6, **characterized in that** the heat conducting element (15) is a rotatably mounted contact wheel (19).

8. Braking device according to one of Claims 4 to 7, **characterized in that** the heat conducting element (15) is thermally connected to a heat sink (18).

9. Method for producing a brake disc (1) according to one or more of the preceding claims, comprising the following steps:

- supplying a base disc (2) composed of lightweight metal, wherein the lightweight metal is applied to a support body manufactured from plastic, and wherein the support body has at least one chamber (22), in which a phase change material is arranged,
- producing an oxide layer (8, 9) on the base disc (2) by hard anodizing or by plasma electrolytic oxidation.

10. Method according to Claim 9, **characterized in that** the base disc (2) is manufactured from titanium or aluminium.

11. Method according to either of Claims 9 and 10, **characterized in that** the base disc (2) is produced as a sheet-metal part.


**Revendications**

1. Disque de frein (1), en particulier pour un véhicule automobile, comprenant un disque de base (2) constitué d'un premier matériau et muni d'un revêtement (8, 9) réduisant l'usure constitué d'un deuxième matériau, le premier matériau étant un métal léger et le deuxième matériau étant une couche d'oxyde (8, 9), **caractérisé en ce que** le premier matériau est appliqué sur un corps de support fabriqué en matière plastique, et le corps de support présente au moins un compartiment (22) dans lequel est disposé un matériau à changement de phase.

2. Disque de frein selon la revendication 1, **caractérisé en ce que** le métal léger est de l'aluminium.

3. Disque de frein selon la revendication 1, **caractérisé en ce que** le métal léger est du titane ou du magnésium.

4. Système de freinage (10) pour un véhicule automobile, comprenant un disque de frein (1) pouvant être ou étant relié à une roue, doté d'un étrier de frein (11) associé au disque de frein (1) et portant au moins un élément de freinage (12, 13) pouvant être actionné, **caractérisé en ce que** le disque de frein (1) est réalisé selon une ou plusieurs des revendications 1 à 3.

5. Système de freinage selon la revendication 4, **caractérisé en ce qu'**au moins un élément thermoconducteur (15) pouvant être mis ou se trouvant en contact avec le disque de frein (1) est disposé sur l'étrier de frein (11).

6. Système de freinage selon l'une quelconque des revendications 4 ou 5, **caractérisé en ce que** l'élément thermoconducteur (15) est un balai de contact (16).

7. Système de freinage selon l'une quelconque des revendications 4 à 6, **caractérisé en ce que** l'élément thermoconducteur (15) est une roue de contact (19) montée rotative.

8. Système de freinage selon l'une quelconque des revendications 4 à 7, **caractérisé en ce que** l'élément thermoconducteur (15) est relié thermiquement à un dissipateur thermique (18).

9. Procédé de fabrication d'un disque de frein (1) selon une ou plusieurs des revendications précédentes, comprenant les étapes suivantes consistant à :

- fournir un disque de base (2) constitué de métal léger, le métal léger étant appliqué sur un corps de support fabriqué en matière plastique, et le corps de support présentant au moins un compartiment (22) dans lequel est disposé un matériau à changement de phase,
- fabriquer une couche d'oxyde (8, 9) sur le disque de base (2) par éloxage ou par oxydation électrolytique à plasma.

10. Procédé selon la revendication 9, **caractérisé en ce que** le disque de base (2) est fabriqué en titane ou en aluminium.

11. Procédé selon l'une quelconque des revendications 9 et 10, **caractérisé en ce que** le disque de base (2) est fabriqué sous la forme d'une pièce en tôle.

Fig. 1

Fig. 2

Fig. 3

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- BE 1016421 A6